# EUROPEAN PATENT APPLICATION

(11) **EP 0 949 713 A1**
(43) Date of publication of application: **13.10.1999**
(21) Application number: 99106102.9
(22) Date of filing: 01.04.1999
(51) Int. Cl.: H01R 9/09

(54) **Process for manufacturing a smart-card reader connector**

(30) Priority: 09.04.1998 FR 9804474
(71) Applicant: FRAMATOME CONNECTORS INTERNATIONAL, 92400 Courbevoie (FR)
(72) Inventor: Odic, Emmanuel, 25300 Pontarlier (FR)
(74) Representative: Beetz & Partner Patentanwälte

(57) **Abstract**

The present invention relates to a process for manufacturing a smart-card reader connector, the said connector having contacts (6) overmoulded in a frame (10) from which protrude contact tails that are intended to be surface-mounted, on a printed-circuit board for example.

According to the invention, the said contact tails (8) are bent before the said contacts (6) are overmoulded in the said frame.

## Description

The present invention relates to a process for manufacturing a smart-card reader connector, the said connector having contacts overmoulded in a plastic frame from which protrude contact tails that are intended to be surface-mounted, for example on a printed-circuit board.

In this type of embodiment, it is necessary, when the product is being used - surface mounting of the components in the case of SMC - as well as throughout the lifetime of the product, and this being so sometimes under harsh handling conditions, for the set of contact tails to be able to apply sufficient contact pressure in order for there to be a good electrical connection to the card's microcircuit.

Thus, it has been found that, in order for this function to be effective, it is necessary for the bearing plane of the contact tails of the connector to be coincident or at least virtually coincident with the plane of the printed-circuit board (PCB). In fact, this coplanarity makes it possible for a requirement called a coplanarity requirement to be effectively met, this being necessary for the implementation of the surface-mounting process, which requirement means that any contact must lie within a maximum tolerance range relative to the plane in which the contact tails of the connector bear on the printed-circuit board, this plane defining the reference plane for the said coplanarity.

Another constraint on the surface-mounting process stems from the fact that this tolerance range must be as small as possible. Furthermore, the dimensional constraints on the product, when printed-circuit boards with which miniaturized electronic devices are intended to be equipped are involved, do not allow the contact tails of the connector to be guided sufficiently accurately. As a result of the constraints describe above, the bearing plane cannot be determined accurately and reproducibly, which means that there is a large scatter with regard to coplanarity.

Generally speaking, in the known processes in the prior art, the contacts to be overmoulded are cut from a supporting strip and then overmoulded in an insulating frame. After overmoulding, the contact tails are bent and the edge of the bearing strip is separated from the set of contacts thus overmoulded. However, despite the precautions taken, coplanarity problems arise.

The object of the invention is to alleviate the drawbacks of the prior art described above.

According to the process of the invention, the contact tails of the connector are bent before the said contacts are overmoulded in the plastic frame.

By virtue of this technique, the process for manufacturing a smart-card reader connector is greatly simplified. Furthermore, the single operation necessary after overmoulding is that of cutting the edge of the supporting strip.

The process according to the invention thus makes it possible to manufacture smart-card reader connectors having contacts overmoulded in a plastic frame from which protrude contact tails that are intended to be surface-mounted on a printed-circuit board, in which the said contacts have a region which is bent before the overmoulding so as to improve the accuracy and the reproducibility of the positioning of the contact tails and thus to obtain virtual coplanarity of the bearing plane of the contact tails with the plane of the printed-circuit board.

Moreover, in the process described below, the length of the contact tails is reduced compared with the length obtained with a bending operation carried out after overmoulding, and this results in better reproducibility in the positioning of the said contact tails, the main advantage being that the product obtained is shorter.

Other features and advantages of the invention will emerge from the description which follows, given by way of non-limiting example, with reference to the appended figures in which:
- Figure 1 shows diagrammatically and partially, in longitudinal section, a connector according to the invention;
- Figure 2 shows a plan view, from above, of the connector in Figure 1.

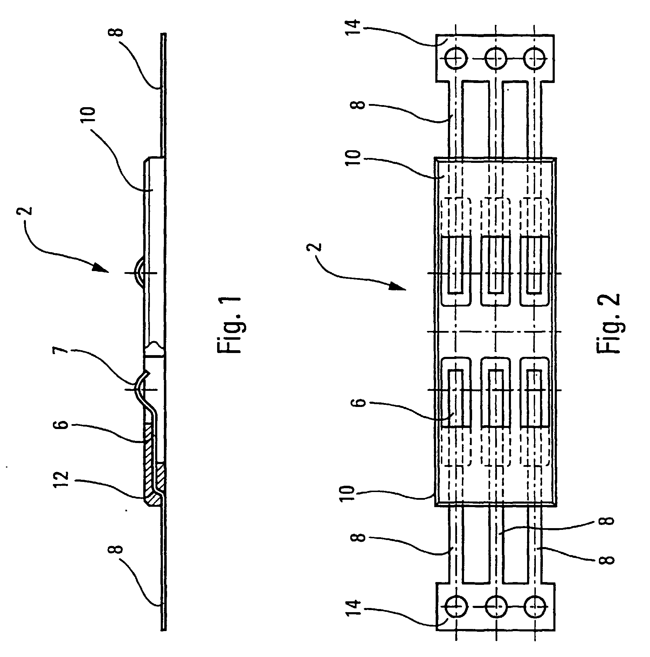

Figure 1 shows diagrammatically a smart-card reader connector 2, the said connector having contacts 6 overmoulded in a plastic frame 10 from which protrude contact tails 8 that are intended to be surface-mounted, for example on a printed-circuit board 3.

These contacts 6 have protruding ends 7 intended to make electrical connection to the card's microcircuit.

As may be seen in this figure, the contacts 6 have a bent region 12.

According to an important feature of the process of the invention, in order to ensure virtual coplanarity of the bearing plane of the contact tails 8 with the plane of the printed-circuit board, this bent region 12 is formed before the contacts 6 are overmoulded in the plastic frame 10. Next, the said contacts are overmoulded, particularly around the bent region 12. In this way, any scatter in the coplanarity is avoided.

In a manner known per se, the said contacts 6 are cut from a supporting strip 14. This operation is carried out after the bending step and after the overmoulding.

The connector according to the invention thus makes it possible to ensure effective electrical connection to a printed-circuit board, which meets the growth in the use of smart cards in increasingly miniaturized appliances such as portable telephones provided with a card reader.

Of course, the connector according to the invention is not limited to this application and can be adapted to other appliances provided with a card reader.

## Claims

1. Process for manufacturing a smart-card reader connector, the said connector (2) having contacts (6) overmoulded in a plastic frame (10) from which protrude contact tails (8) that are intended to be surface-mounted on a printed-circuit board, characterized in that the said contact tails (8) are bent before the said contacts (6) are overmoulded in the plastic of the said frame (10)

2. Process according to Claim 1, characterized in that the said contacts (6) are overmoulded around the bending region (12).

3. Process according to either of Claims 1 and 2, characterized in that the said contacts (6) are cut from a supporting strip (14) after the overmoulding.

4. Smart-card reader connector (2), the said connector having contacts (6) overmoulded in a plastic frame (10) from which protrude contact tails (8) that are intended to be surface-mounted on a printed-circuit board, characterized in that the said contacts (6) have a bent region (12), the bending of which is carried out before the overmoulding so as to obtain virtual coplanarity of the bearing plane of the contact tails (8) with the plane of the printed-circuit board.
